# EUROPÄISCHE PATENTSCHRIFT

(11) **EP 2 721 338 B1**
(45) Veröffentlichungstag und Bekanntmachung des Hinweises auf die Patenterteilung: **22.11.2017**
(21) Anmeldenummer: 12730466.5
(22) Anmeldetag: 20.06.2012
(51) Int. Cl.: F16T 1/14, F16T 1/38, F16K 51/00, F16T 1/00, G05D 9/12

(54) **KONDENSAT-ABLEITER FÜR DRUCKGASSYSTEME**
CONDENSATE DISCHARGE DEVICE FOR COMPRESSED GAS SYSTEMS
PURGEUR DE CONDENSAT POUR SYSTÈMES À GAZ COMPRIMÉ

(30) Priorität: 20.06.2011 DE 102011051201
(43) Veröffentlichungstag der Anmeldung: 23.04.2014
(73) Patentinhaber: Beko Technologies GmbH, 41468 Neuss (DE)
(72) Erfinder: SCHLENSKER, Herbert, 51381 Leverkusen (DE); SINSTEDTEN, Johannes, 41352 Korschenbroich (DE)
(74) Vertreter: Patentanwälte Bauer Vorberg Kayser
(86) Internationale Anmeldenummer: PCT/EP2012/061858
(87) Internationale Veröffentlichungsnummer: WO 2012/175565

(56) Entgegenhaltungen:
- DE-A1- 4 323 004
- US-A- 956 030
- US-A- 3 905 385
- US-B1- 6 206 025

## Beschreibung

Die vorliegende Erfindung betrifft einen Kondensatableiter für Druckgassysteme, insbesondere Druckluftsysteme, nach dem Oberbegriff des Anspruchs 1.

Derartige Kondensatableiter werden beispielsweise in der Drucklufttechnik verwendet, um das üblicherweise in dem Druckleitungsnetz entstehende Kondensat, das neben Wasser auch Öl oder Rost enthalten kann, aus diesem zu entfernen. Die Kondensate entstehen aus der Feuchtigkeit der Umgebungsluft, die der Druckluftkompressor ansaugt. Das Öl entstammt im Wesentlichen den Kompressoren, in denen es als Schmiermittel verwendet wird, der Rost hingegen in der Regel aus den Druckluftleitungen.

Es sind unterschiedliche Bauformen von Kondensatableitern bekannt. Allgemein arbeiten diese derart, dass ein Ventil geöffnet wird, wodurch das Kondensat aus dem Druckluftnetz durch den Druck ausgetrieben wird. Bei diesem Vorgang ist der Gas- bzw. Druckluftverlust aus Gründen der Wirtschaftlichkeit beim Betrieb des Druckgassystems möglichst gering zu halten.

Gattungsgemäße Kondensatableiter lassen sich nach der Art der Ansteuerung des Ventils und seiner Energieversorgung im Wesentlichen in drei Gruppen einteilen:
So genannte Schwimmerableiter arbeiten mit einem Hohlkörper, der durch die Auftriebskraft der sich in einer Sammelkammer ansammelnden Flüssigkeit (Kondensat) angehoben wird und damit ein Ventil betätigt. Dieses Ventil öffnet meist indirekt mittels einer Servosteuerung eine Ablassöffnung der Sammelkammer, durch die das Kondensat herausgedrückt wird. Die als Schwimmerableiter ausgeführten Kondensatableiter sind aufgrund ihrer kostengünstigen Herstellbarkeit sehr weit verbreitet, jedoch auch störungsanfällig.

Des Weiteren sind Kondensatableiter mit zeitgesteuerten Magnetventilen, die elektrisch betätigte Ventile sind, bekannt. Diese öffnen die Ventile in einstellbaren Zeitintervallen. Nachteilig ist das Öffnen bei fehlendem Kondensat, wodurch hohe Energieverluste durch abgelassene Druckluft verursacht werden.

Schließlich erfassen Kondensatableiter mit elektronisch niveaugeregelten Ventilen, im Folgenden auch als elektronisch niveaugeregelte Kondensatableiter bezeichnet, eine sich ansammelnde Flüssigkeits- bzw. Kondensatmenge über einen elektronischen Sensor. Wenn eine bestimmte Menge erreicht ist, wird das Ventil geöffnet und genau diese Menge ohne zusätzliche Druckluftverluste abgeleitet. Diese Art von Kondensatableitern sind in der Herstellung zwar relativ teuer, zeichnen sich jedoch andererseits durch einen sehr kostengünstigen Betrieb aus, weshalb sich mit den elektronisch niveaugeregelten Kondensatableitern über deren gesamte Betriebslebensdauer wesentliche Kostenvorteile erzielen lassen.

Ein elektronisch niveaugeregelter Kondensatableiter ist beispielsweise in der EP 0 391 250 B1 offenbart. Diese EP-Schrift beschreibt eine Vorrichtung zum Ableiten von Kondensat aus Druckgassystemen, zum Beispiel Druckluftsystemen und dergleichen, mit einer an das Druckluftsystem dauernd angeschlossenen Sammelkammer für Kondensat. Aus dem Druckluftsystem wird an einer Auslassstelle, beispielsweise dem tiefsten Punkt einer Rohrleitung, Kondensat entnommen, das sich in der Sammelkammer des Kondensatableiters sammelt. In dieser Sammelkammer ragt mindestens ein in einem sich senkrecht in die Sammelkammer erstreckenden Rohrkörper angeordneter elektronischer Sensor, beispielsweise ein kapazitiver Sensor, der den Pegelstand des Kondensats erfasst. Bevorzugt sind bei dem beschriebenen Ausführungsbeispiel zwei derartige Sensoren in unterschiedlicher Höhe in dem Rohrkörper vorgesehen. Wenn die Sammelkammer bis zur Höhe des oberen Sensors gefüllt ist, beginnt ein Ableitvorgang. Die mit den Sensoren verbundene Elektronik öffnet eine Ventilanordnung. Dadurch wird der Weg für das Kondensat aus der Sammelkammer zu einem Kondensatablass frei. Die Ventilanordnung umfasst beispielsweise ein Steuerventil in Form eines Magnetventils und ein hierdurch gesteuertes Haupt- bzw. Ableitventil in Form eines Membranventils. Auf diese Weise werden die Betätigungskräfte und damit die Anforderungen an die Elektronik verringert. Die Steuerung des Hauptventils erfolgt bei dem offenbarten Kondensatableiter mit Hilfe von sauberer Druckluft, die einer kondensatfreien Schutzzone in der Sammelkammer des Kondensatableiters entnommen wird.

Auch aus der US 956 030 A ist die Verwendung eines elektronischen Füllstandmessers bekannt. Beschrieben ist die Verwendung eines Schwimmers als elektronischer Füllstandmesser.

Der Einsatzort derartiger Kondensatableiter in Druckgassystemen ist sehr unterschiedlich, beispielsweise an unteren Anschlüssen von Druckluftfiltern oder Druckluftspeichern. Häufig ist der Einbauraum für den Kondensatableiter beschränkt, zum Beispiel durch die Bodenfreiheit oder die Sichtbarkeit des Bedienfelds des Kondensatableiters. Da die vorbekannten Kondensatableiter jedoch beispielsweise durch die Festlegung der sauberen inneren Schutzzone oder der Einbaulage des Sensors lediglich in einer bestimmten Montageposition, zum Beispiel entweder nur horizontal oder nur vertikal, montiert werden können, behilft man sich in den Fällen, in denen ein unmittelbarer Anschluss an das Druckgassystem aufgrund des Bauraums nicht möglich ist, mit zusätzlichen Adaptern oder Verlängerungen und Hilfsleitungen.

Die DE 43 23 004 A1 beschreibt einen Kondensatableiter mit einem Gehäuse, das in wenigstens einer ersten, vertikalen Montageposition und einer zweiten, horizontalen Montageposition montierbar ist. Möglich ist diese Anordnung unter anderem deshalb, weil kein elektronischer Fülllstandmesser verwendet wird. Ein Schwimmer ist innerhalb des rohrförmigen Gehäuses derart angeordnet, dass er sowohl in horizontaler als auch in vertikaler Ausrichtung des Gehäuses ein Verschlussorgan bzw. ein Ventil öffnet. Die Längsachse des rohrförmigen Gehäuses verläuft schräg zur Kondensatzulaufrichtung. Ein solches System ist zwar kostengünstig, aber auch störanfällig. Die für die Kondensatsableitung maßgeblichen Bauteile befinden sich stets im abzuleitenden Kondensat.

Vor diesem Hintergrund hat sich die vorliegende Erfindung die Aufgabe gestellt, einen Kondensatableiter für Druckgassysteme, insbesondere Druckluftsysteme, mit einem elektronischen Füllstandsmesser zu schaffen, der gegenüber vorbekannten Kondensatableitern wesentlich erweiterte Montagemöglichkeiten und somit wesentlich erweiterte Einsatz- und Betriebsmöglichkeiten bietet. Die Montage soll darüber hinaus einfach und kostengünstig möglich und ein dauerhaft störfreier Betrieb gewährleistet sein.

Diese Aufgabe wird durch einen Kondensatableiter für Druckgassysteme, insbesondere Druckluftsysteme, mit den Merkmalen des Anspruchs 1 gelöst. Weitere, besonders vorteilhafte Ausgestaltungen der Erfindung offenbaren die Unteransprüche.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Erfindungsgemäß umfasst ein Kondensatableiter für Druckgassysteme, insbesondere Druckluftsysteme, ein Gehäuse, das eine über einen Kondensatzulauf an das Druckgassystem anschließbare Kondensatsammelkammer und einen mittels einer Ventilanordnung verschließbaren Kondensatablauf aufweist, und einen in die Kondensatsammelkammer ragenden Rohrkörper zur Aufnahme wenigstens eines Füllstandsmessers, mittels welchem der Kondensatfüllstand in der Kondensatsammelkammer erfassbar ist. Das Gehäuse des erfindungsgemäßen Kondensatableiters ist wenigstens in einer ersten, vertikalen Montageposition und einer zweiten, horizontalen Montageposition montierbar, wobei die Längsachse des Rohrkörpers schräg zur Kondensatzulaufrichtung verläuft.

Der Begriff "Rohrkörper" ist im Sinne der vorliegenden Erfindung breit auszulegen und beschreibt allgemein einen länglichen Hohlkörper, dessen Länge im Wesentlichen größer ist als sein Durchmesser. Die Querschnittsform des Rohrkörpers wird durch den Begriff "Rohrkörper" nicht speziell vorgegeben bzw. eingeschränkt. Auch wenn ein kreisrunder Querschnitt für die häufigsten Anwendungsfälle als eine optimale Bauform angesehen wird, kann der Querschnitt, beispielsweise zur Erhöhung der Steifigkeit, auch rechteckige, ovale und weitere Formen annehmen.

Unter der ersten, vertikalen und der zweiten, horizontalen Montageposition des Kondensatableiters bzw. seines Gehäuses sind zwei Montagepositionen zu verstehen, die sich im Wesentlichen durch eine Drehung des Gehäuses um etwa 90 Grad um eine beliebige Raumachse, das heißt Längs-, Quer- oder Hochachse des Kondensatableiters, unterscheiden. Eine derartige Drehung um die Hochachse des Kondensatableiters, wobei als Hochachse des Kondensatableiters eine Raumachse parallel zur Lotrichtung zu verstehen ist, kann jedoch für die vorliegende Erfindung außer Betracht bleiben, da sich die durch Drehung um die Hochachse erzielbaren zwei Montagepositionen in diesem Fall nicht auf die Lage des Flüssigkeits- bzw. Kondensatspiegels in der Kondensatsammelkammer auswirken. Für die vorliegende Erfindung sind folglich insbesondere solche Montagepositionen von Bedeutung, in denen sich die Lage des Flüssigkeits- bzw. Kondensatspiegels in der Kondensatsammelkammer verändert, wie wenn die zwei Montagepositionen zum Beispiel durch eine Drehung um die Längs- oder Querachse des Kondensatableiters erzielt werden. Erfindungsgemäß kann dabei auch jeder beliebige Winkel zwischen 0 Grad (horizontal) und 90 Grad (vertikal) ohne Funktionseineinschränkungen für den Kondensatableiter eingenommen werden.

Erfindungsgemäß verläuft die Längsachse des in die Kondensatsammelkammer ragenden Rohrkörpers schräg zur Kondensatzulaufrichtung. Als Kondensatzulaufrichtung ist die Fließrichtung des über den Kondensatzulauf in die Kondensatsammelkammer zulaufenden Kondensats aus dem Druckgassystem zu verstehen. Somit ragt der Rohrkörper in keiner der beiden ersten und zweiten Montagepositionen des Kondensatableiters senkrecht, das heißt parallel zur Lotrichtung, in die Kondensatsammelkammer, sondern schließt mit der Lotrichtung stets einen Winkel größer als 0 Grad, bevorzugt etwa +/-45 Grad, ein. Hierbei ist unter einer Lotrichtung die örtliche Richtung des Schwere- bzw. Schwerkraftvektors zu verstehen, wie sie beispielsweise durch ein langes Schnurlot realisiert werden kann. Durch die spezielle Ausrichtung des Rohrkörpers und somit des darin aufgenommenen wenigstens einen Füllstandsmessers kann der Füllstand des Kondensats innerhalb der Kondensatsammelkammer sowohl in der ersten als auch in der zweiten Montageposition des Kondensatableiters stets zuverlässig und genau erfasst werden. Das heißt, die Erfassung des Kondensatfüllstands in der Kondensatsammelkammer ist unabhängig von den tatsächlichen, wenigstens ersten und zweiten Montagepositionen sicher durchführbar.

Insgesamt sind somit die Einsatz- und Montagemöglichkeiten des erfindungsgemäßen Kondensatableiters im Vergleich zu Kondensatableitern nach dem Stand der Technik wesentlich erweitert. Insbesondere gestattet der erfindungsgemäße Kondensatableiter sowohl wenigstens eine vertikale als auch eine horizontale Montage ohne bezüglich der Wahl der tatsächlichen Montageposition bauliche oder strukturelle Veränderungen und dergleichen am Kondensatableiter selbst vornehmen zu müssen. In wenigstens beiden Montagepositionen ist aufgrund der schrägen Anordnung des Rohrkörpers in die Kondensatsammelkammer stets eine exakte Erfassung des Kondensatfüllstands mittels des in dem schrägen Rohrkörper aufgenommenen Füllstandsmessers gewährleistet. Durch die erweiterten Montagemöglichkeiten des erfindungsgemäßen Kondensatableiters lässt sich insgesamt der Montageaufwand verringern sowie Montagezeit und -material einsparen. Die Erfindung sieht vor, dass während des Betriebs in wenigstens der ersten und zweiten Montageposition in der Kondensatsammelkammer mittels wenigstens einer Sperrwand ab einem bestimmten Kondensatfüllstand ein kondensatfreier Hohlraum in einem Verbindungsbereich des Rohrkörpers mit der Kondensatsammelkammer ausgebildet ist. Hierunter ist zu verstehen, dass sich der Hohlraum, obwohl er auch bei leerer Kondensatsammelkammer an sich vorhanden ist, erst mit steigendem Kondensatspiegel zu einem geschlossenen Hohlraum ausbildet. Wenn das Kondensat innerhalb der Kondensatsammelkammer einen bestimmten Füllstand erreicht, insbesondere wenn der steigende Kondensatspiegel die Sperrwand erreicht, wird der Hohlraum geschlossen und bleibt somit auch bei einem weiteren Anstieg des Kondensatspiegels erhalten und kondensatfrei. Somit ist der Hohlraum unabhängig von dem tatsächlichen Füllstand des Kondensats in der Kondensatsammelkammer und unabhängig von den wenigstens ersten und zweiten Montagepositionen des Kondensatableiters stets kondensatfrei und somit schmutzsicher.

In diesen Hohlraum, der auch als Schutzzone bezeichnet wird, kann somit kein Kondensat gelangen, mithin kann sich dort auch keine Ablagerung irgendwelcher Partikel bilden, die möglicherweise im Kondensat mitgeführt werden. Dadurch wird vermieden, dass sich von der Außenwand des den Füllstandsmesser aufnehmenden Rohrkörpers hin zur Innenwand der Kondensatsammelkammer ein durchgehender Belag bilden kann. Der Füllstandsmesser wird somit geschützt, insbesondere vor einem messtechnischen Kurzschluss, der eine genaue Erfassung des Kondensatfüllstands in der Kondensatsammelkammer erheblich beeinträchtigen bzw. verhindern würde. Dies trifft insbesondere für den Fall zu, dass der Füllstandsmesser durch wenigstens einen kapazitiven Sensor gebildet ist, wobei der kapazitive Sensor eine in dem Rohrkörper angeordnete Innenelektrode und eine durch die Kondensatsammelkammer oder durch ein in der Kondensatsammelkammer angeordnetes Masserohr gebildete Außenelektrode aufweist und die vorgenannten Kondensatablagerungen somit zu einem messtechnischen Kurzschluss zwischen der Innenelektrode und der Außenelektrode des Füllstandsmessers führen können. Folglich werden durch den Hohlraum Fehlmessungen infolge von unerwünschten Kondensatablagerungen verhindert.

Gemäß einer vorteilhaften Ausgestaltung der Erfindung ist der Hohlraum in Richtung des Kondensatzulaufs durch die Sperrwand luftdicht abgeschlossen und in Richtung des Kondensatablaufs offen. Der luftdichte Abschluss des Hohlraums in Richtung Kondensatzulauf verhindert, dass ab einem bestimmten, durch die Sperrwand vorgebbaren Kondensatspiegel innerhalb der Kondensatsammelkammer aus dem Hohlraum keine Luft mehr entweichen kann, da der Kondensatspiegel in diesem Zustand die kondensatablaufseitige Öffnung des Hohlraums verschließt. Bei weiter steigendem Kondensatspiegel in der Kondensatsammelkammer kann folglich kein Kondensat in den Hohlraum eindringen. Die Öffnung des Hohlraums in Richtung Kondensatablauf verhindert wirksam, dass sich eine durchgehende Kondensatablagerung zwischen der Außenwand des Rohrkörpers und der Innenwand der Kondensatsammelkammer bildet.

Gemäß einer weiteren vorteilhaften Ausgestaltung der Erfindung weist die Sperrwand ein L-förmiges Querschnittsprofil auf, wobei ein erster Schenkel der Sperrwand senkrecht zur Kondensatzulaufrichtung und ein zweiter Schenkel der Sperrwand parallel zur Kondensatzulaufrichtung ausgebildet sind. Wie bereits erwähnt, ist als Kondensatzulaufrichtung die Fließrichtung des über den Kondensatzulauf in die Kondensatsammelkammer zulaufenden Kondensats aus dem Druckgassystem zu verstehen. Somit ist die Sperrwand in besonders einfacher Ausbildung in der Lage, mittels des ersten, senkrecht zur Kondensatzulaufrichtung ausgerichteten Schenkels den Hohlraum luftdicht in Richtung des Kondensatzulaufs zu verschließen, während der zweite, parallel zur Kondensatzulaufrichtung ausgerichtete Schenkel den Kondensatfüllstand in der Kondensatsammelkammer vorgibt, ab dem der Kondensatspiegel den durch den ersten Schenkel umschlossenen Hohlraum verschließt und somit auch bei einem weiteren Anstieg des Kondensatspiegels in der Sammelkammer kein weiteres Kondensat in den Hohlraum eindringen kann. Auf den senkrecht zur Kondensatzulaufrichtung ausgebildeten Schenkel der Sperrwand kann gegebenenfalls verzichtet werden, sofern der parallel zur Kondensatzulaufrichtung ausgebildete Schenkel der Sperrwand an einer senkrecht zur Kondensatzulaufrichtung verlaufenden Innenwand der Kondensatsammelkammer angebracht ist. Als eine solche Innenwand der Kondensatsammelkammer kann zum Beispiel die Decke der Kondensatsammelkammer herangezogen werden.

Für eine maximale Ausnutzung des von der Kondensatsammelkammer bereitgestellten Volumens sieht eine weitere vorteilhafte Ausgestaltung der Erfindung vor, dass die Sperrwand im Kondensatzulauf, insbesondere an einer bezüglich der tatsächlichen Montageposition des Kondensatableiters oberen Seite des Kondensatzulaufs angeordnet ist. Somit steht das unterhalb der Sperrwand befindliche Volumen der Kondensatsammelkammer im Wesentlichen vollständig zum Auffangen des Kondensats zur Verfügung.

Gemäß einer weiteren vorteilhaften Ausgestaltung der Erfindung ist der Hohlraum in den Bereichen, in denen er nicht durch die Sperrwand begrenzt ist, von der Kondensatsammelkammer begrenzt. Es reicht folglich aus, die Sperrwand lediglich zur Begrenzung des Kondensatspiegels in der Kondensatsammelkammer vorzusehen, nicht jedoch zur Umschließung des gesamten kondensatfreien Hohlraums bzw. der gesamten Schutzzone zu verwenden. Hierdurch vereinfacht sich der Aufbau des erfindungsgemäßen Kondensatableiters.

In einer noch weiteren vorteilhaften Ausgestaltung der Erfindung ist die Mündung des Kondensatablaufs an einer Stelle in der Kondensatsammelkammer angeordnet, an der sich im Betrieb Kondensat befindet. Hierdurch wird sichergestellt, dass das in der Kondensatsammelkammer aufgefangene Kondensat unabhängig von den tatsächlichen, wenigstens ersten und zweiten Montagepositionen jederzeit zuverlässig abgelassen werden kann.

Gemäß einer weiteren vorteilhaften Ausgestaltung der Erfindung umfasst die Ventilanordnung ein Steuerventil, insbesondere ein Magnetventil, und ein Ableitventil, insbesondere ein Membranventil, wobei mit dem Steuerventil ein Hilfsdruck zwischen dem Steuerventil und dem Ableitventil auf- und abbaubar ist und das Druckmedium für den Hilfsdruck dem Hohlraum entnehmbar ist. Auf diese Weise kann der Hilfsdruck in besonders effizienter Weise zur Ansteuerung des Ableitventils erzeugt werden, da das Druckmedium im Hohlraum durch den Druck des Druckgassystems bereits unter Druck steht. Ferner wird durch den Hohlraum ein stets kondensatfreies Druckmedium bereitgestellt, so dass das Steuerventil nicht durch Kondensatablagerungen bzw. im Kondensat mitgeführte feste Bestandteile verschmutzt oder beschädigt wird.

Weitere vorteilhafte Einzelheiten und Wirkungen der Erfindung sind im Folgenden anhand eines in den Figuren dargestellten Ausführungsbeispiels näher erläutert. Es zeigen:
- Fig. 1: eine Seitenschnittansicht eines Ausführungsbeispiels eines erfindungsgemäßen Kondensatableiters in einer ersten, vertikalen Montageposition,
- Fig. 2: eine Seitenschnittansicht des erfindungsgemäßen Kondensatableiters aus Figur 1 in einer zweiten, horizontalen Montageposition,
- Fig. 3: eine Schnittansicht entlang der in Figur 1 gekennzeichneten Schnittlinie A-A zur Verdeutlichung des Sperrwandverlaufs,
- Fig. 4: ein erstes Verwendungsbeispiel des erfindungsgemäßen Kondensatableiters aus Figur 1 in der ersten, vertikalen Montageposition und
- Fig. 5: ein zweites Verwendungsbeispiel des erfindungsgemäßen Kondensatableiters aus Figur 1 in der zweiten, horizontalen Montageposition.

In den unterschiedlichen Figuren sind gleiche Teile stets mit denselben Bezugszeichen versehen, so dass diese in der Regel auch nur einmal beschrieben werden.

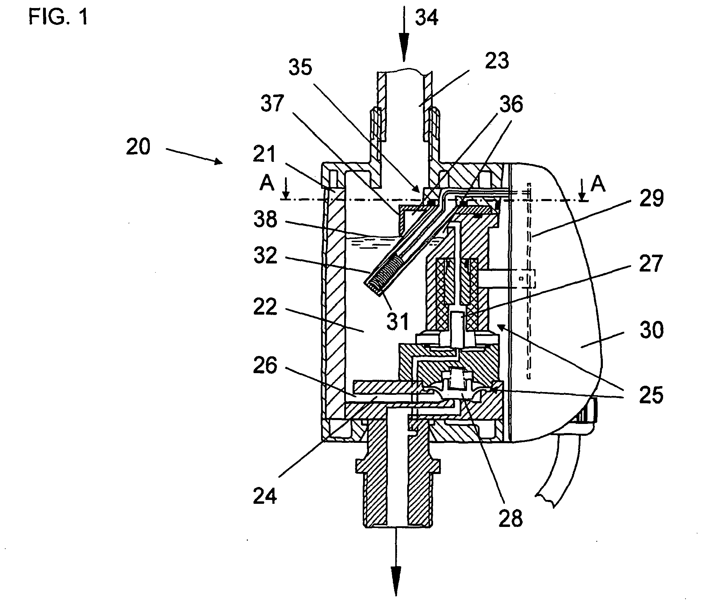

Figur 1 zeigt eine Seitenschnittansicht eines Ausführungsbeispiels eines erfindungsgemäßen Kondensatableiters 20 für Druckgassysteme, insbesondere für Druckluftsysteme, in einer ersten, vertikalen Montageposition. Der Kondensatableiter 20 umfasst ein Gehäuse 21, das eine Kondensatsammelkammer 22 aufweist. Die Kondensatsammelkammer 22 ist über einen Kondensatzulauf 23 an das in Figur 1 nicht weiter dargestellte Druckgassystem anschließbar. Über den Kondensatzulauf 23 kann der Kondensatsammelkammer 22 Kondensat aus dem Druckgassystem zufließen. Über einen Kondensatablauf 24 gelangt das Kondensat wieder aus der Kondensatsammelkammer 22 heraus. Der Kondensatablauf 24 ist mittels einer Ventilanordnung 25 verschließbar. Wie in Figur 1 zu erkennen ist, ist eine Mündung 26 des Kondensatablaufs 24 in einer linken unteren Ecke der Kondensatsammelkammer 22 angeordnet. Sobald sich in der Kondensatsammelkammer 22 Kondensat ansammelt, befindet sich das Kondensat im Betrieb des erfindungsgemäßen Kondensatableiters 20 bei der in Figur 1 dargestellten ersten, vertikalen Montageposition auch an der Mündung 26, so dass dieses in den Kondensatablauf 24 gelangen kann, sobald die Ventilanordnung 25 den Kondensatablauf 24 freigibt.

Die Ventilanordnung 25 umfasst bei dem dargestellten Ausführungsbeispiel ein Steuerventil 27, vorzugsweise ein Magnetventil, und ein Ableitventil 28, vorzugsweise ein Membranventil. Eine solche Ventilanordnung 25 ist an sich bekannt, beispielsweise aus der eingangs genannten EP-Schrift. Mit Hilfe des Magnetventils 27 wird bei dem in Figur 1 dargestellten Kondensatableiter 20 oberhalb der Ventilmembran des Membranventils 28 ein Hilfsdruck aufgebaut, um das Membranventil 28 und somit den Kondensatablauf 24 zu verschließen. Um das Membranventil 28 zu öffnen und Kondensat abzuleiten, wird der Hilfsdruck durch das Magnetventil 27 abgebaut, so dass das in der Kondensatsammelkammer 22 unter Druck stehende Kondensat die Ventilmembran des Membranventils 28 öffnen und somit über den Kondensatablauf 24 abfließen kann.

Die Steuerung des Magnetventils 27 übernimmt eine in Figur 1 symbolisch angedeutete Steuerelektronik 29, mit der das Magnetventil 27 elektrisch verbunden ist. Die Steuerelektronik 29 befindet sich in einer separaten Kammer 30 des Gehäuses 21, die gegenüber Kondensat abgedichtet ist. Mit der Steuerelektronik 29 ist ferner ein elektronischer Füllstandsmesser 31 elektrisch verbunden, wie ebenfalls der Figur 1 zu entnehmen ist. Der Füllstandsmesser 31 ist in einem Rohrkörper 32 aufgenommen und umfasst in dem gezeigten Ausführungsbeispiel einen kapazitiven Sensor, der mit der Steuerelektronik 29 ebenfalls elektrisch verbunden ist. Mittels des kapazitiven Sensors misst die Steuerelektronik 29 in an sich bekannter Weise den Füllstand des in der Kondensatsammelkammer 22 befindlichen Kondensats. Die Steuerelektronik 29 ist bei dem in Figur 1 dargestellten Kondensatableiter 20 ausgelegt, den Kondensatfüllstand in der Kondensatsammelkammer 22 kontinuierlich oder zeitdiskret zu messen, wobei die zeitdiskreten Messungen jedoch bevorzugt in Zeitintervallen kleiner 100 ms ausgeführt werden, um somit eine quasi kontinuierliche Messung zu realisieren. Ferner ist die Steuerelektronik 29 ausgelegt, die Ventileinrichtung 25 abhängig von dem festgestellten Kondensatfüllstand derart zu steuern, dass sie den Kondensatablauf 24 bei einem bestimmten hohen Füllstand öffnet und somit den Ableitvorgang des Kondensats aus der Kondensatsammelkammer 22 einleitet und den Kondensatablauf 24 bei Erreichen eines niedrigeren Füllstands wieder verschließt. Vorteilhafterweise schließt die Steuerelektronik 29 den Kondensatablauf 24 bevor die Kondensatsammelkammer 22 vollständig entleert ist, um damit das unnötige Entweichen von Druckgas aus dem Kondensatableiter 20 zu vermeiden. Folglich ermöglicht der derartig elektronisch niveaugeregelte Kondensatableiter 20 einen besonders wirtschaftlichen, insbesondere energieeffizienten, Betrieb.

Wie Figur 1 zu entnehmen ist, verläuft der Rohrkörper 32 in der dargestellten ersten, vertikalen Montageposition schräg zur Kondensatzulaufrichtung 34. Insbesondere erstreckt sich der Rohrkörper 32 von einer rechten, oberen Stelle der Kondensatsammelkammer 22 nach links unten. Die rechte obere Stelle bildet hierbei einen Verbindungsbereich 35 des Rohrkörpers 32 mit der Kondensatsammelkammer 22. In diesem Verbindungsbereich 35 ist in der Kondensatsammelkammer 22 ein kondensatfreier Hohlraum 36 ausgebildet. Insbesondere ist der Hohlraum 36 unabhängig von dem tatsächlichen Füllstand des Kondensats in der Kondensatsammelkammer 22 in der in Figur 1 gezeigten ersten, vertikalen Montageposition des Kondensatableiters 20 stets kondensatfrei und somit schmutzsicher. In den Hohlraum 36 kann somit kein Kondensat gelangen, mithin kann sich dort auch keine Ablagerung irgendwelcher Partikel bilden, die möglicherweise im Kondensat mitgeführt werden. Dadurch wird vermieden, dass sich von der Außenwand des den Füllstandsmesser 31 aufnehmenden Rohrkörpers 32 hin zur Innenwand der Kondensatsammelkammer 22 ein durchgehender Belag bilden kann. Der Füllstandsmesser 31 wird somit geschützt, insbesondere vor einem messtechnischen Kurzschluss, der eine genaue Erfassung des Kondensatfüllstands in der Kondensatsammelkammer 22 wesentlich beeinträchtigen bzw. verhindern würde.

Der Figur 1 ist ferner eine Sperrwand 37 zu entnehmen, die den Hohlraum 36 in Richtung des Kondensatzulaufs 23 luftdicht abschließt und in Richtung des Kondensatablaufs 24 offen lässt. Der luftdichte Abschluss des Hohlraums 36 in Richtung Kondensatzulauf 23 verhindert, dass ab dem in Figur 1 eingezeichneten Kondensatspiegel 38, dessen Höhe durch die Sperrwand 37 festgelegt ist, aus dem Hohlraum 36 Luft entweichen kann. Der Kondensatspiegel 38 verschließt in diesem Zustand die kondensatablaufseitige Öffnung des Hohlraums 36. Steigt der Kondensatspiegel in der Kondensatsammelkammer 22 über den Kondensatspiegel 38 hinaus an, kann dennoch kein Kondensat in den Hohlraum 36 eindringen. Die kondensatablaufseitige Öffnung des Hohlraums 36 verhindert, dass sich eine durchgehende Kondensatablagerung zwischen der Außenwand des Rohrkörpers 32 und der Innenwand der Kondensatsammelkammer 22 bilden kann. Wie in Figur 1 ferner zu erkennen ist, ist die Sperrwand 37 bei dem gezeigten Ausführungsbeispiel des erfindungsgemäßen Kondensatableiters 20 lediglich mit dem Rohrkörper 32 verbunden.

Wie Figur 1 weiter zu entnehmen ist, weist die Sperrwand 37 ein L-förmiges Querschnittsprofil auf, wobei ein erster Schenkel der Sperrwand 37 senkrecht zur Kondensatzulaufrichtung 34 und ein zweiter Schenkel der Sperrwand parallel zur Kondensatzulaufrichtung 34 ausgebildet sind. Der erste, senkrecht zur Kondensatzulaufrichtung 34 ausgerichtete Schenkel dient dazu, den Hohlraum luftdicht in Richtung des Kondensatzulaufs 23 zu verschließen. Der zweite, parallel zur Kondensatzulaufrichtung 34 ausgerichtete Schenkel legt hingegen die Höhe des Kondensatspiegels 38 in der Kondensatsammelkammer 22 fest, ab welcher der durch den ersten Schenkel umschlossene Hohlraum 36 luftdicht verschlossen ist. Ein weiterer Anstieg des Kondensatspiegels innerhalb des Hohlraums 36 wird somit wirksam verhindert. Der L-förmige Querschnitt erlaubt eine besonders einfache und wirksame Ausbildung der Sperrwand 37.

Bei dem in Figur 1 dargestellten Ausführungsbeispiel des erfindungsgemäßen Kondensatableiters 20 ist die Sperrwand 37 im Kondensatzulauf 23, insbesondere an der rechten oberen Seite des Kondensatzulaufs 23, angeordnet. Dies ermöglicht eine maximale Ausnutzung des von der Kondensatsammelkammer 22 bereitgestellten Volumens zum Auffangen des Kondensats.

In den Bereichen, in denen der Hohlraum 36 nicht durch die Sperrwand 37 begrenzt ist, zum Beispiel den in der Figur 1 vor und hinter der Zeichenebene liegenden Seitenbereichen der Sperrwand 37, ist der Hohlraum 36 von der Kondensatsammelkammer 22 begrenzt. Es reicht folglich aus, die Sperrwand 37 lediglich zur Begrenzung des Kondensatspiegels in der Kondensatsammelkammer 22 vorzusehen, sie ist jedoch nicht zur Umschließung des gesamten kondensatfreien Hohlraums 36 erforderlich. Die Sperrwand 37 und die Kondensatsammelkammer 22 schließen also den gesamten Hohlraum 36 ab. Hierdurch vereinfacht sich der Aufbau des erfindungsgemäßen Kondensatableiters 20.

Der Figur 1 ist schließlich zu entnehmen, dass dem Hohlraum 36 zur Erzeugung des über das Steuerventil 27 bereitgestellten Hilfsdrucks in vorteilhafter Weise Druckmedium entnehmbar ist. Auf diese Weise kann der Hilfsdruck in besonders effizienter Weise zur Ansteuerung des Ableitventils 28 erzeugt werden, da das Druckmedium im Hohlraum 36 durch den Druck des Druckgassystems bereits unter Druck steht. Ferner wird durch den Hohlraum 36 ein stets kondensatfreies Druckmedium bereitgestellt, so dass das Steuerventil 27 nicht durch Kondensatablagerungen verschmutzt oder beschädigt wird.

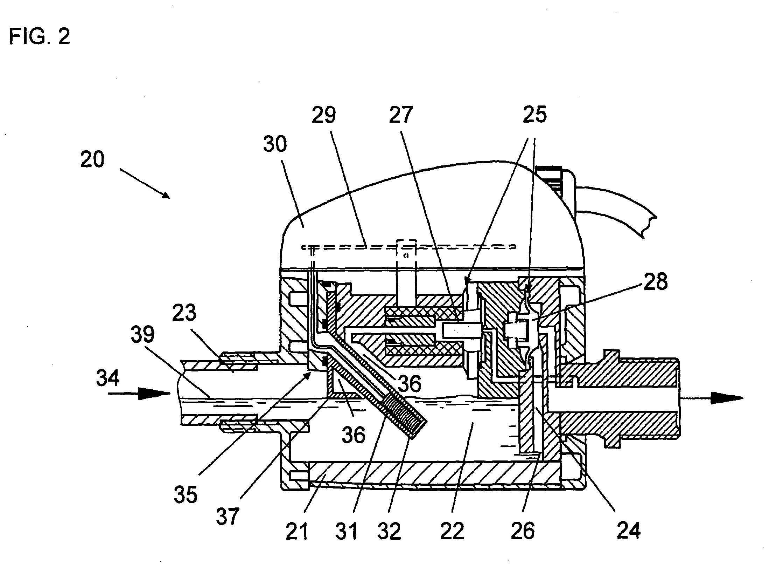

Figur 2 stellt eine Seitenschnittansicht des erfindungsgemäßen Kondensatableiters aus Figur 1 in einer zweiten, horizontalen Montageposition dar. Die in Figur 2 dargestellte horizontale Montageposition unterscheidet sich von der in Figur 1 dargestellten, vertikalen Montageposition dadurch, dass der erfindungsgemäße Kondensatableiter 20 etwa 90 Grad um seine Querachse, das heißt die Achse senkrecht zur Zeichenebene, gedreht ist. Der in Figur 2 dargestellte Kondensatableiter 20 weist ansonsten keine Veränderungen gegenüber dem in Figur 1 dargestellten Kondensatableiter 20 auf.

Figur 2 ist ein Kondensatspiegel 39 in der Kondensatsammelkammer 22 zu entnehmen, ab dem der durch den ersten Schenkel der Sperrwand 37, der senkrecht zur Kondensatzulaufrichtung 34 ausgerichtet ist, umschlossene Hohlraum 36 luftdicht verschlossen ist. Der zweite, parallel zur Kondensatzulaufrichtung 34 ausgerichtete Schenkel der Sperrwand 37 ist in der dargestellten horizontalen Montageposition des Kondensatableiters 20 zur Festlegung des Kondensatspiegels 39 zwar nicht in der eingezeichneten Länge erforderlich, zur Festlegung des Kondensatspiegels 39 bei der in Figur 1 dargestellten vertikalen Montageposition des Kondensatableiters 20 jedoch sehr wohl. Ein weiterer Anstieg des Kondensatspiegels innerhalb des Hohlraums 36 wird jedenfalls auch in der horizontalen Montageposition des erfindungsgemäßen Kondensatableiters 20 mit Hilfe der Sperrwand 37 wirksam verhindert. Der L-förmige Querschnitt erlaubt eine besonders einfache und wirksame Ausbildung der Sperrwand 37.

Wie bereits im Zusammenhang mit der Beschreibung der Figur 1 erwähnt wurde, ist die Anordnung der Mündung 26 des Kondensatablaufs 24 in der Kondensatsammelkammer 22 des erfindungsgemäßen Kondensatableiters 20 derart gewählt, dass sich während des Betriebs des Kondensatableiters 20 auch in der zweiten, horizontalen Montageposition Kondensat an der Mündung 26 ansammeln kann. Wie Figur 2 zu entnehmen ist, befindet sich die Mündung 26 in der gezeigten horizontalen Montageposition an einer rechten unteren Stelle der Kondensatsammelkammer 22, an der sich im Betrieb Kondensat befindet. So kann dieses in den Kondensatablauf 24 gelangen, sobald die Ventilanordnung 25 den Kondensatablauf 24 freigibt.

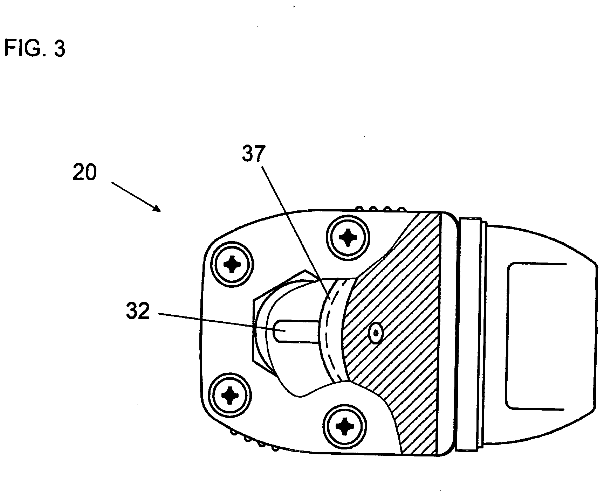

Figur 3 stellt eine Schnittansicht des Kondensatableiters 20 entlang der in Figur 1 gekennzeichneten Schnittlinie A-A zur Verdeutlichung des Sperrwandverlaufs dar. Wie Figur 3 zu entnehmen ist, umgibt die Sperrwand 37 bei dem dargestellten Ausführungsbeispiel des Kondensatableiters 20 den Rohrkörper 32 in etwa kreis- bzw. ellipsenförmig. Die strichliniert gezeichnete Linie innerhalb der in Figur 3 sichtbaren Sperrwand 37 gibt die Begrenzung des unterhalb der Zeichenebene verlaufenden, sich parallel zur Kondensatzulaufrichtung 34 erstreckenden zweiten Schenkels der L-förmigen Sperrwand 37 an. Auf diese Weise ist die Ausbildung des Hohlraums 36 in dem gesamten Bereich um den Eintritt des Rohrkörpers 32 bzw. des Füllstandsmessers 31 in die Kondensatsammelkammer 22 sichergestellt.

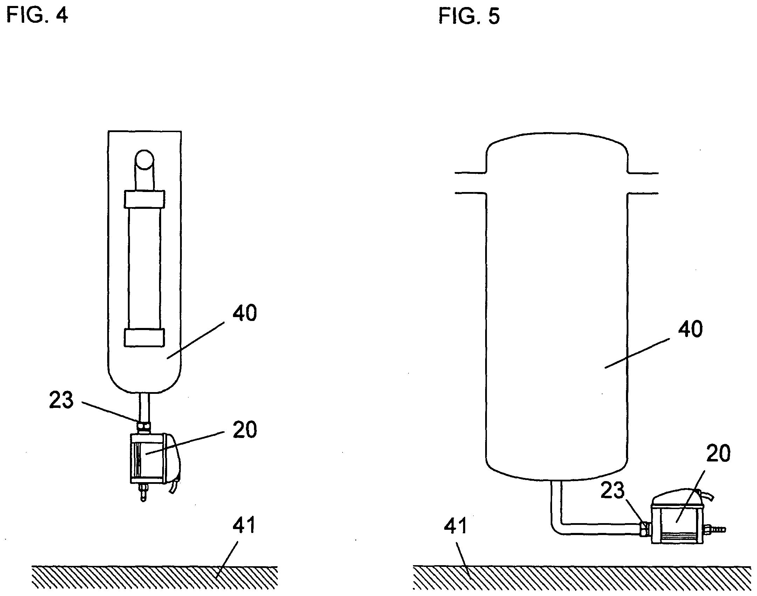

In den Figuren 4 und 5 sind jeweils ein Beispiel einer ersten und zweiten Verwendung des erfindungsgemäßen Kondensatableiters aus Figur 1 in der ersten, vertikalen Montageposition und der zweiten, horizontalen Montageposition dargestellt. In Figur 4 ist der erfindungsgemäße Kondensatableiter 20 in einer vertikalen Montageposition angeordnet und mit einem symbolisch dargestellten Druckgassystem 40, insbesondere einem Druckluftsystem, über den Kondensatzulauf 23 verbunden. Da, wie in Figur 1 zu erkennen ist, ein ausreichender Abstand zwischen einer unteren Seite des Druckgassystems, an welcher der Kondensatableiter 20 vorteilhafterweise angeschlossen wird, und einem Boden 41 vorhanden ist, ist eine vertikale Montage des erfindungsgemäßen Kondensatableiters 20 in diesem Fall die einfachste Möglichkeit der Montage.

Figur 5 stellt hingegen den Verwendungsfall dar, in dem kein ausreichender Abstand zwischen einer Anschlussseite des Druckgassystems 40 und dem Boden 41 verbleibt. In diesem Fall lässt sich der erfindungsgemäße Kondensatableiter 20 jedoch vorteilhafterweise horizontal montieren, so dass der verfügbare Montageraum noch optimal genutzt werden kann. Zusätzliche Adapter, Verlängerungen oder Hilfsleitungen zum Anschluss des Kondensatableiters 20 sind aufgrund seiner erweiterten Montagemöglichkeiten im Wesentlichen nicht mehr erforderlich, so dass sich der Montageaufwand mit dem erfindungsgemäßen Kondensatableiter 20 insgesamt verringern und sich Montagezeit und -material einsparen lassen.

Der erfindungsgemäße Kondensatableiter wurde anhand eines in den Figuren dargestellten Ausführungsbeispiels näher erläutert. Der Kondensatableiter ist jedoch nicht auf die hierin beschriebenen Ausführungsformen beschränkt, sondern umfasst auch gleich wirkende weitere Ausführungsformen. Obwohl der Kondensatableiter in den Figuren lediglich in einer vertikalen und einer horizontalen Montageposition gezeigt wurde, ist er ebenso in jedem beliebigen Winkel zwischen 0 Grad (horizontal) und 90 Grad (vertikal), das heißt in einer zwischen der ersten, vertikalen und der zweiten, horizontalen Montageposition beliebigen Montageposition ohne Funktionseineinschränkungen für den Kondensatableiter montierbar.

In bevorzugter Ausführung wird der erfindungsgemäße Kondensatableiter zum Ableiten von Kondensat aus Druckgassystemen, insbesondere Druckluftsystemen, verwendet, wobei das Kondensat mittels einer elektronisch niveaugeregelten Ventileinrichtung des erfindungsgemäßen Kondensatableiters wie hierin beschrieben ausgetrieben wird.

### Bezugszeichenliste:

- 20: Kondensatableiter
- 21: Gehäuse von 20
- 22: Kondensatsammelkammer
- 23: Kondensatzulauf
- 24: Kondensatablauf
- 25: Ventilanordnung
- 26: Mündung von 24
- 27: Steuerventil, Magnetventil
- 28: Ableitventil, Membranventil
- 29: Steuerelektronik
- 30: Kammer für 29
- 31: Füllstandsmesser
- 32: Rohrkörper
- 34: Kondensatzulaufrichtung
- 35: Verbindungsbereich zwischen 22 und 32
- 36: Hohlraum
- 37: Sperrwand
- 38: Kondensatspiegel in vertikaler Montageposition
- 39: Kondensatspiegel in horizontaler Montageposition
- 40: Druckgassystem
- 41: Boden

## Patentansprüche

1. Kondensatableiter für Druckgassysteme mit einem Gehäuse (21), das eine über einen Kondensatzulauf (23) an das Druckgassystem anschließbare Kondensatsammelkammer (22) und einen mittels einer Ventilanordnung (25) verschließbaren Kondensatablauf (24) aufweist, einem in die Kondensatsammelkammer (22) ragenden Rohrkörper (32) zur Aufnahme wenigstens eines elektronischen Füllstandsmessers (31), mittels welchem der Kondensatfüllstand in der Kondensatsammelkammer (22) erfassbar ist, wobei das Gehäuse (21) in wenigstens einer ersten, vertikalen Montageposition und einer zweiten, horizontalen Montageposition montierbar ist und die Längsachse des Rohrkörpers (32) schräg zur Kondensatzulaufrichtung (34) verläuft,
**dadurch gekennzeichnet, dass**
während des Betriebs in wenigstens der ersten und zweiten Montageposition in der Kondensatsammelkammer (22) mittels wenigstens einer Sperrwand (37) ab einem bestimmten Kondensatfüllstand ein kondensatfreier Hohlraum (36) in einem Verbindungsbereich (35) des Rohrkörpers (32) mit der Kondensatsammeikammer (22) ausgebildet ist.

2. Kondensatableiter nach Anspruch 1,
**dadurch gekennzeichnet, dass**
das Gehäuse (21) in jedem beliebigen Winkel zwischen der ersten, vertikalen Montageposition und der zweiten, horizontalen Montageposition montierbar ist.

3. Kondensatableiter nach Anspruch 1 oder Anspruch 2,
**dadurch gekennzeichnet, dass**
der Hohlraum (36) in Richtung des Kondensatzulaufs (23) durch die Sperrwand (37) luftdicht abgeschlossen ist und in Richtung des Kondensatablaufs (24) offen ist.

4. Kondensatableiter nach einem der Ansprüche 1 bis 3,
**dadurch gekennzeichnet, dass**
die Sperrwand (37) ein L-förmiges Querschnittsprofil aufweist, wobei ein erster Schenkel der Sperrwand (37) senkrecht zur Kondensatzulaufrichtung (34) und ein zweiter Schenkel der Sperrwand (37) parallel zur Kondensatzulaufrichtung (34) ausgebildet sind.

5. Kondensatableiter nach einem der Ansprüche 1 bis 4,
**dadurch gekennzeichnet, dass**
die Sperrwand (37) im Kondensatzulauf (23) angeordnet ist.

6. Kondensatableiter nach einem der Ansprüche 1 bis 5,
**dadurch gekennzeichnet, dass**
der Hohlraum (36) in den Bereichen, in denen er nicht durch die Sperrwand (37) begrenzt ist, von der Kondensatsammeikammer (22) begrenzt ist.

7. Kondensatableiter nach einem der Ansprüche 1 bis 6
**dadurch gekennzeichnet, dass**
die Mündung (26) des Kondensatablaufs (24) an einer Stelle in der Kondensatsammelkammer (22) angeordnet ist, an der sich im Betrieb Kondensat befindet.

8. Kondensatableiter nach einem Ansprüche 1 bis 7,
**dadurch gekennzeichnet, dass**
die Ventilanordnung (25) ein Steuerventil (27), vorzugsweise ein Magnetventil, und ein Ableitventil (28), vorzugsweise ein Membranventil, umfasst, wobei mit dem Steuerventil (27) ein Hilfsdruck zwischen dem Steuerventil (27) und dem Ableitventil (28) auf- und abbaubar ist und das Druckmedium für den Hilfsdruck dem Hohlraum (36) entnehmbar ist.

## Claims

1. A condensate discharge device for compressed gas systems with a housing (21) which comprises a condensate collecting chamber (22), which can be connected to the compressed gas system by means of a condensate feed (23), and a condensate drain (24), which can be closed by means of a valve assembly (25), a tubular body (32) protruding into the condensate collecting chamber (22) for accommodating at least one electronic filling level measuring device (31), by means of which the condensate filling level in the condensate collecting chamber (22) can be detected, wherein the housing (21) can be mounted in at least a first, vertical mounting position and a second, horizontal mounting position and the longitudinal axis of the tubular body (32) runs obliquely with respect to the condensate feed direction (34),
**characterized in that**
from a certain condensate filling level, a condensate-free cavity (36) in a connecting region (35) of the tubular body (32) with the condensate collecting chamber (22) is formed in the condensate collecting chamber (22) during operation in at least the first and second mounting position by means of at least one barrier wall (37).

2. The condensate discharge device according to claim 1,
**characterized in that**
the housing (21) can be mounted at any arbitrary angle between the first, vertical mounting position and the second, horizontal mounting position.

3. The condensate discharge device according to claim 1 or claim 2,
**characterized in that**
the cavity (36) is closed off in an airtight manner by the barrier wall (37) in the direction of the condensate feed (23) and is open in the direction of the condensate drain (24).

4. The condensate discharge device according to any one of the claims 1 to 3,
**characterized in that**
the barrier wall (37) has an L-shaped cross-sectional profile, wherein a first leg of the barrier wall (37) is formed perpendicular to the condensate feed direction (34) and a second leg of the barrier wall (37) is formed parallel to the condensate feed direction (34).

5. The condensate discharge device according to any one of the claims 1 to 4,
**characterized in that**
the barrier wall (37) is disposed in the condensate feed (23).

6. The condensate discharge device according to any one of the claims 1 to 5,
**characterized in that**
the cavity (36) is delimited by the condensate collecting chamber (22) in those regions in which it is not delimited by the barrier wall (37).

7. The condensate discharge device according to any one of the claims 1 to 6,
**characterized in that**
the mouth (26) of the condensate drain (24) is disposed at a location in the condensate collecting chamber (22) at which condensate is present during operation.

8. The condensate discharge device according to any one of the claims 1 to 7,
**characterized in that**
the valve assembly (25) comprises a control valve (27), preferably a magnet valve, and a discharge valve (28), preferably a diaphragm valve, wherein an auxiliary pressure between the control valve (27) and the discharge valve (28) can be built up and released with the control valve (27) and the pressure medium for the auxiliary pressure can be withdrawn from the cavity (36).

## Revendications

1. Purgeur de condensat pour des systèmes à gaz comprimé, comprenant un boîtier (21) qui présente une chambre collectrice de condensat (22) apte à être raccordée au système à gaz comprimé par l'intermédiaire d'une alimentation en condensat (23) et une évacuation de condensat (24) apte à être fermée au moyen d'un ensemble de clapet (25), un corps tubulaire (32) faisant saillie dans la chambre collectrice de condensat (22) et destiné à loger au moins un dispositif de mesure de niveau de remplissage (31) électronique au moyen duquel le niveau de remplissage de condensat dans la chambre collectrice de condensat (22) peut être détecté, dans lequel ledit boîtier (21) peut être monté dans au moins une première position de montage verticale et dans une deuxième position de montage horizontale et l'axe longitudinal du corps tubulaire (32) s'étend obliquement par rapport à la direction d'alimentation en condensat (34), **caractérisé par le fait que**, durant le fonctionnement dans au moins les première et deuxième positions de montage, un espace vide (36) exempt de condensat est formé dans la chambre collectrice de condensat (22) au moyen d'au moins une paroi barrière (37), à partir d'un certain niveau de remplissage de condensat, dans une zone de liaison (35) du corps tubulaire (32) avec la chambre collectrice de condensat (22).

2. Purgeur de condensat selon la revendication 1, **caractérisé par le fait que** le boîtier (21) peut être monté à n'importe quel angle entre la première position de montage verticale et la deuxième position de montage horizontale.

3. Purgeur de condensat selon la revendication 1 ou la revendication 2, **caractérisé par le fait que** ledit espace vide (36) est fermé hermétiquement par la paroi barrière (37) dans la direction de l'alimentation en condensat (23) et est ouvert dans la direction de l'évacuation de condensat (24).

4. Purgeur de condensat selon l'une quelconque des revendications 1 à 3, **caractérisé par le fait que** la paroi barrière (37) présente un profil en coupe transversale en L, dans lequel une première branche de la paroi barrière (37) est réalisée perpendiculairement à la direction d'alimentation en condensat (34) et une deuxième branche de la paroi barrière (37) est réalisée parallèlement à la direction d'alimentation en condensat (34).

5. Purgeur de condensat selon l'une quelconque des revendications 1 à 4, **caractérisé par le fait que** la paroi barrière (37) est disposée dans l'alimentation en condensat (23).

6. Purgeur de condensat selon l'une quelconque des revendications 1 à 5, **caractérisé par le fait que** ledit espace vide (36) est délimité par la chambre collectrice de condensat (22) dans les zones dans lesquelles il n'est pas délimité par la paroi barrière (37).

7. Purgeur de condensat selon l'une quelconque des revendications 1 à 6, **caractérisé par le fait que** la bouche (26) de l'évacuation de condensat (24) est disposée sur un point à l'intérieur de la chambre collectrice de condensat (22) où est situé du condensat lors du fonctionnement.

8. Purgeur de condensat selon l'une quelconque des revendications 1 à 7, **caractérisé par le fait que** ledit ensemble de clapet (25) comprend une soupape de commande (27), de préférence une électrovanne, et une vanne de décharge (28), de préférence une soupape à diaphragme, dans lequel une pression auxiliaire peut être établie et supprimée par le biais de la soupape de commande (27) entre la soupape de commande (27) et la vanne de décharge (28), et le milieu sous pression pour la pression auxiliaire peut être prélevé dans l'espace vide (36).
